# DEMANDE DE BREVET EUROPEEN

(11) **EP 0 893 838 A1**
(43) Date de publication de la demande: **27.01.1999**
(21) Numéro de dépôt: 98202367.3
(22) Date de dépôt: 15.07.1998
(51) Int. Cl.: H01M 10/12, H01M 2/18, H01M 6/12

(54) **Cellule électrochimique élémentaire planaire, élément précurseur pour une telle cellule, et élément accumulateur plat incluant une telle cellule**

(30) Priorité: 22.07.1997 FR 9709293
(71) Demandeur: Koninklijke Philips Electronics N.V., 5621 BA Eindhoven (NL)
(72) Inventeur: Rapeli, Juha, 75008 Paris (FR)
(74) Mandataire: Lottin, Claudine

(57) **Abrégé**

L'invention concerne une cellule électrochimique élémentaire planaire (20) incluant une première et une seconde feuilles d'électrodes (31, 34) entre lesquelles se trouve au moins une couche de matériau séparateur perméable pour un électrolyte sous pression. Selon l'invention cette cellule comprend un système d'agrafage non conducteur desdites feuilles d'électrodes et couche(s) de matériau séparateur (32, 33) pour les presser ensemble.

L'invention concerne également un élément précurseur pour réaliser une ou plusieurs de telles cellules, et un élément accumulateur plat incluant au moins une telle cellule.
Application : Accumulateur rechargeable de type planaire.

## Description

L'invention concerne une cellule électrochimique élémentaire planaire, un élément précurseur pour une telle cellule, et un élément accumulateur plat incluant une telle cellule.

L'invention trouve son application dans l'industrie des piles et batteries rechargeables. L'objet de l'invention est utilisé dans les appareils portables tels que les terminaux téléphoniques mobiles.

Une cellule unitaire de batterie plomb-acide et une enveloppe étanche pour la contenir et former un élément accumulateur plat sont déjà connues de la demande de brevet EP 0 296 623 (Sealed Lead-Acid Battery). Ce document enseigne qu'une cellule unitaire plomb-acide comprend des plaques d'électrode positive et négative, et un séparateur imprégné d'acide sulfurique. Un élément accumulateur plan incluant une telle cellule unitaire comprend un boîtier plan, hermétiquement clos, avec cependant une valve de sécurité pour évacuer le surplus de gaz produit à l'occasion par les réactions électrochimiques.

Un tel accumulateur plat doit résoudre trois problèmes principaux. Un premier problème est que la cellule électrochimique doit être enfermée dans une enveloppe substantiellement plane et mince et étanche, c'est-à-dire qui ne laisse pas pénétrer des gaz externes et qui ne laisse pas fuir l'acide sulfurique, ce qui ferait baisser les performances des cycles de charge-décharge.

Selon le document cité, ce problème est résolu par un boîtier plat contenant la cellule élémentaire électrochimique et ayant un couvercle très mince scellé par des moyens spéciaux d'étanchéité.

Un second problème est que l'accumulateur plat doit être très mince. Selon le document cité, le couvercle très mince du boîtier plat contribue à résoudre ce problème. Un troisième problème est que la cellule électrochimique doit être soumise à une surpression interne pour que les réactions électrochimiques normales se produisent. Selon le document cité, ce problème est résolu en adjoignant au premier boîtier un second boîtier plat de renfort qui peut être fait en métal ou acier et dont les parois planes de renfort montrent une résistance et une rigidité suffisante pour supporter la pression requise, tout en étant aussi minces que possible.

Dit autrement, selon le document cité, c'est le boîtier plat et particulièrement les parois planes du boîtier plat de renfort qui assurent la fonction d'appliquer la pression nécessaire au bon fonctionnement de la cellule électrochimique. Dans ces conditions, il n'est pas possible d'obtenir un élément accumulateur d'épaisseur inférieure ou environ égale à 2mm, car lesdites parois planes du boîtier de renfort deviendraient trop minces et ne pourraient assurer leur fonction, tout au moins en utilisant des matériaux courants et d'un coût abordable dans l'industrie.

Un but de la présente invention est de proposer une cellule électrochimique élémentaire qui est soumise à des moyens de pression autres que la pression procurée par les parois planes du boîtier de l'accumulateur plan.

Ce but est atteint au moyen d'une cellule électrochimique élémentaire planaire incluant une première et une seconde feuilles d'électrodes entre lesquelles se trouve au moins une couche de matériau séparateur perméable pour un électrolyte sous pression, caractérisée en ce qu'elle comprend un système d'agrafage non conducteur desdites feuilles d'électrodes et couche(s) de matériau séparateur pour les presser ensemble.

Un avantage de ce système d'agrafage est qu'il constitue un moyen pour appliquer la pression requise sur la cellule électrochimique unitaire planaire sans l'aide de parties du boîtier.

Dans une mise en oeuvre particulière, cette cellule électrochimique élémentaire est caractérisée en ce que le matériau séparateur comprend au moins une première et une seconde couches et en ce que le système d'agrafage non conducteur comprend au moins une couche d'accrochage mécanique non conductrice perméable à l'électrolyte disposée entre lesdites couches de matériau séparateur, munie d'au moins une agrafe en matériau non conducteur pour presser lesdites feuilles d'électrode et couches de matériau séparateur contre ladite couche d'accrochage mécanique.

Dans une mise ne oeuvre particulière, cette cellule électrochimique élémentaire est caractérisée en ce que la couche d'accrochage mécanique comprend des moyens de support non conducteur pour la ou les agrafe(s), ladite ou lesdites agrafe(s) étant constituée(s) respectivement par un couple de picots transversaux avec des extrémités s'étendant respectivement de part et d'autre desdits moyens de support à travers ladite première couche de matériau séparateur et ladite première feuille d'électrode d'une part, et à travers ladite seconde couche de matériau séparateur et ladite seconde feuille d'électrode d'autre part, et les extrémités des picots ayant des moyens pour presser ensemble lesdites couches de matériau séparateur et feuilles d'électrode avec la couche d'accrochage.

Dans cette mise en oeuvre la pression requise appliquée sur la cellule électrochimique élémentaire est bien efficace. En particulier l'épaisseur de la cellule unitaire peut devenir inférieure ou égale à 0,6mm.

Un autre but de l'invention est de proposer un élément précurseur pour la fabrication d'une telle cellule élémentaire planaire.

Ce but est atteint au moyen d'un élément précurseur pour réaliser une ou plusieurs cellules électrochimiques élémentaires planaires semblables, ayant une telle structure, caractérisé en ce qu'il comprend une couche d'accrochage mécanique non conductrice en position centrale, et respectivement de part et d'autre de cette position centrale, des premières couche de matériau séparateur et feuille d'électrodes, et des secondes couche de matériau séparateur et feuille d'électrodes, à travers lesquelles s'étendent les picots des moyens de support de la couche d'accrochage, pour les agrafer presser ensemble, et caractérisé en ce qu'il a une superficie suffisamment grande pour fournir une ou plusieurs cellules électrochimiques élémentaires planaires par découpe de parties comprenant au moins chacune un système d'agrafage.

Un autre avantage du système d'agrafage selon l'invention est que les couches une fois bloquées pressées ensemble, le précurseur peut être découpé pour former avantageusement plusieurs cellules électrochimiques élémentaires, sans ajouter beaucoup de travail à la réalisation d'une seule cellule élémentaire électrochimique.

Un autre but de l'invention est de fournir un élément accumulateur plat.

Ce but est atteint au moyen d'un élément accumulateur comprenant un boîtier planaire, des terminaux électriques de polarités opposées, et au moins une telle cellule unitaire électrochimique planaire avec des moyens de liaison des feuilles d'électrode et des terminaux correspondants.

Avec une telle cellule unitaire électrochimique, l'accumulateur plat n'a pas nécessairement des parois planes très résistantes mécaniquement. L'épaisseur de ces parois planes peut devenir très faible, et l'accumulateur plat peut montrer une épaisseur totale inférieure ou égale à 2mm.

L'invention est décrite ci-après en détail, dans différents modes de réalisation, en référence aux figures schématiques annexées dont la liste suit :
- les figures 1A, 1B, 1C représentent respectivement en coupe des parties de cellules électrochimiques élémentaires dans trois modes de réalisation ;
- les figures 2A, 2B représentent respectivement en perspective et en coupe un support élémentaire pour un couple de picots, pour une couche d'accrochage mécanique ;
- les figures 3A, 3B représentent respectivement en perspective et en coupe un support en ruban pour des couples de picots, pour une couche d'accrochage mécanique ;
- les figures 4A, 4B, 4C représentent respectivement en perspective, en vue plane et en coupe un support grillagé pour des couples de picots, pour une couche d'accrochage mécanique ;
- les figures 5A, 5B illustrent un procédé de réalisation d'un élément précurseur pour former au moins une cellule électrochimique élémentaire ;
- la figure 6 représente en coupe un élément accumulateur plat.

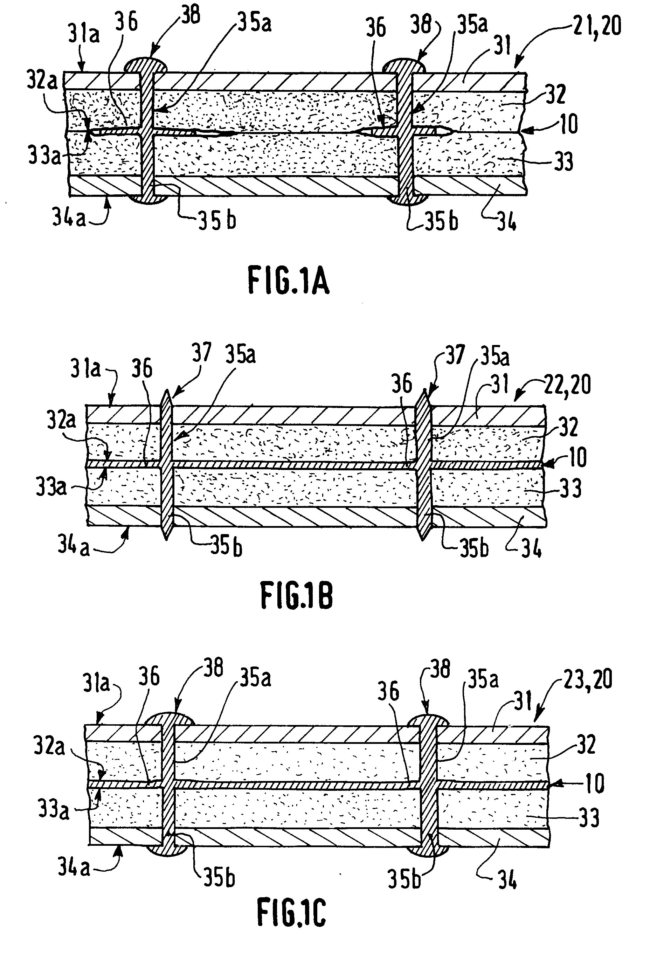

En référence aux figures 1A, 1B, 1C, une cellule électrochimique élémentaire planaire 20 comprend une première feuille d'électrode 31 et une seconde feuille d'électrode 34, respectivement pour des polarités électriques opposées. Entre ces feuilles d'électrodes se trouve au moins une couche de matériau séparateur 32, 33, perméable pour un électrolyte. Il est indispensable pour le fonctionnement de la cellule électrochimique que cet ensemble d'éléments (feuilles d'électrodes, matériau séparateur, électrolyte) soit maintenu sous une pression supérieure à la pression atmosphérique, et soit contenu dans une enveloppe ou un boîtier d'une part étanche à l'électrolyte, et d'autre part étanche aux agents extérieurs tels que l'air et l'humidité.

Selon l'invention les éléments de la cellule électrochimique sont maintenus sous pression au moyen d'un système d'agrafage non conducteur 11 ou 12 ou 13.

Dans différents exemples de mise en oeuvre d'une cellule électrochimique élémentaire planaire 20, munie d'un système d'agrafage, décrits ci-après, le matériau séparateur comprend de préférence au moins deux couches, ou un couple de couches, où les couches sont référencées respectivement première(s) couche(s) 32 et seconde(s) couche(s) 33. Le système d'agrafage comprend au moins une couche d'accrochage non conductrice 10, perméable à l'électrolyte, disposée entre les première et seconde couches de matériau séparateur 32, 33. La couche d'accrochage mécanique 10 est munie d'au moins une agrafe non conductrice 35a, 35b, 38 pour presser les feuilles d'électrodes 31, 34 et les couches de matériau séparateur 32, 33 contre cette couche d'accrochage 10.

En référence à la figure 1A et aux figures 1B, 1C la couche d'accrochage 10 comprend des moyens de support non conducteur 36 pour au moins une agrafe 35a, 35b. De préférence cette agrafe est constituée par un couple de picots transversaux en matériau non conducteur avec des extrémités 37 s'étendant respectivement de part et d'autre des moyens de support 36 à travers la première couche de matériau séparateur 32 et la première feuille d'électrode 31, d'une part, et à travers la seconde couche de matériau séparateur 33 et la seconde feuille d'électrode 34. Les extrémités des picots ont des moyens 38 pour presser ensemble les couches de matériau séparateur et les feuilles d'électrode contre la couche d'accrochage.

Comme montré sur la figure 1B, les extrémités 37 des picots s'étendent à cet effet au-delà des surfaces externes 31a, 34a des feuilles d'électrodes et dont d'abord des pointes. Comme montré sur les figures 1A et 1C après insertion à travers les feuilles et couches, les extrémités 37 sont aplaties sur ces surfaces externes formant des têtes de blocage 38, pour bloquer en pressant ensemble les couches de matériau séparateur et feuilles d'électrodes avec la couche d'accrochage 10.

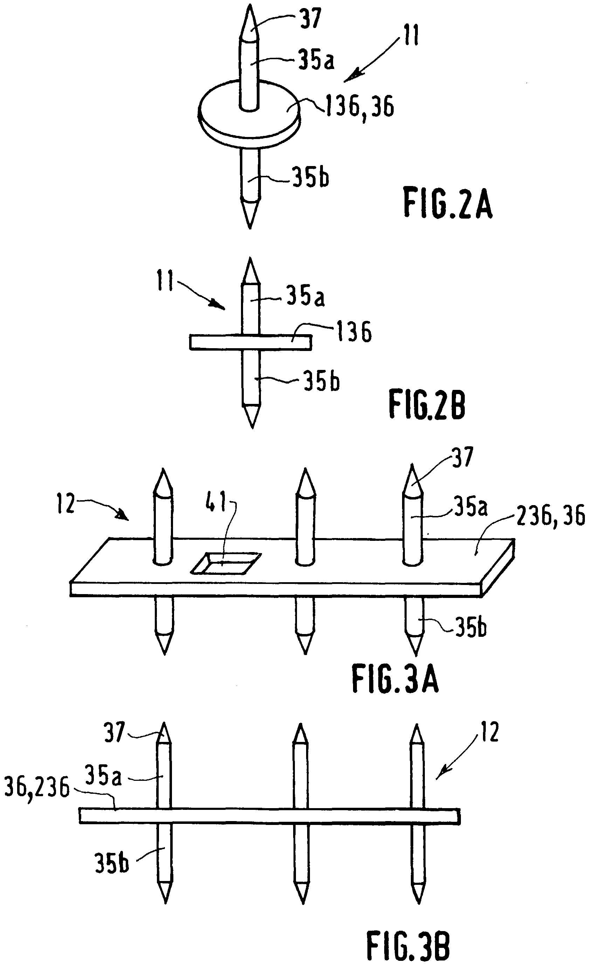

En référence à la figure 1A, à la figure 2A en perspective et à la figure 2B en coupe, le moyen de support 36 est une surface élémentaire qui peut être favorablement une rondelle 136. Un couple de picots 35a, 35b s'étend de part et d'autre de la rondelle 136. Les picots ont des extrémités en forme de pointes 37 pour pénétrer et traverser les couches et feuilles formant la cellule électrochimique référencée 21 dans ce cas. Le système d'agrafage comprenant un ou des supports élémentaires 136 et un ou des couples de picots 35a, 35b est référencé 11. Pour former un système d'agrafage 11 opérant une pression uniformément répartie sur la cellule électrochimique 21, de préférence plusieurs supports élémentaires 136 avec leurs picots 35a, 35b sont distribués de manière régulière en couche 10.

En référence à la figure 1B, et à la figure 3A en perspective et à la figure 3B en coupe, le moyen de support 36 est une ruban 236 sur lequel sont distribués un ou plusieurs couples de picots 35a, 35b. Pour opérer une pression uniforme, de préférence les couples de picots sont distribués régulièrement sur le ruban. Le système d'agrafage comprenant ce ruban est référencé 12. La cellule électrochimique comprenant ce système d'agrafage 12 est référencée 22.

Des ouvertures 41 pour la perméabilité de l'électrolyte peuvent être pratiquées dans le ruban 236, mais non obligatoirement, selon que la dimension transversale du ruban permet le positionnement de ces ouvertures entre des couples de picots.

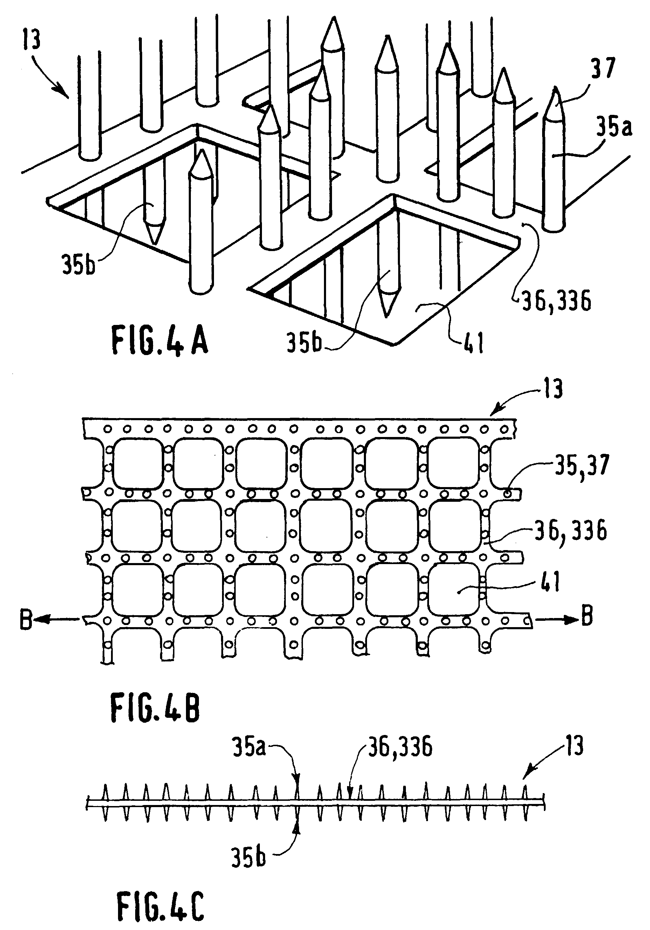

En référence à la figure 1C, à la figure 4A en perspective, à la figure 4B en vue plane et la figure 4C en coupe, le moyen de support 36 est une surface grillagée 336 munie d'ouvertures 41 de perméabilité pour l'électrolyte, et sur laquelle est ou sont distribué(s) un ou plusieurs couples de picots 35a, 35b. La figure 4C est une coupe selon l'axe BB de la figure 4B. Les figures 4 ne sont pas à la même échelle. Le système d'agrafage comprenant cette surface grillagée est référencé 13, et la cellule électrochimique comprenant ce système d'agrafage est référencée 23.

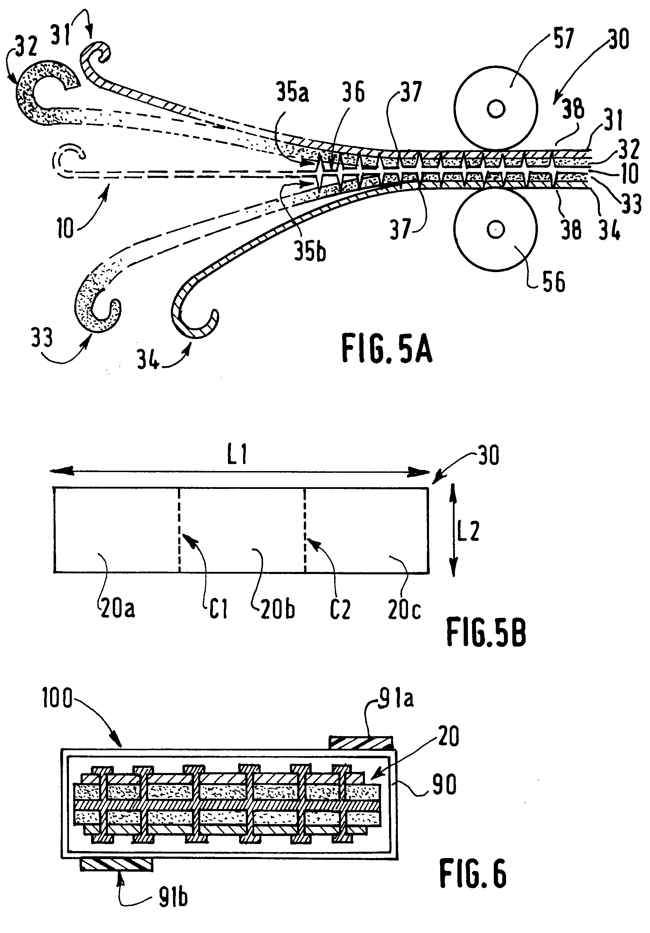

En référence à la figure 5A en coupe, un système précurseur 30 pour réaliser une ou plusieurs cellules électrochimiques élémentaires 20a, 20b, 20c semblables ayant une structure telle que décrite dans les exemples précédents, comprend une couche d'accrochage mécanique 10 en matériau non conducteur en position centrale, et respectivement de part et d'autre de cette position centrale, des premières couche de matériau séparateur 32 et feuille d'électrodes 31, et des secondes couche de matériau séparateur 33 et feuilles d'électrodes 34 à travers lesquelles s'étendent les picots non conducteurs des moyens de support non conducteurs de la couche d'accrochage, pour les agrafer pressées ensemble.

Ce système précurseur a une superficie suffisamment grande pour fournir une ou plusieurs cellules électrochimiques élémentaires planaires par découpe C1, C2 de parties 20a, 20b, 20c comprenant au moins chacune un système d'agrafage 11, 12 ou 13.

En référence aux figures 5A et 5B, un procédé de réalisation d'une cellule électrochimique d'un type 21, 22 ou 23 décrit précédemment comprend une étape de réalisation d'un élément précurseur 30, et, occasionnellement, une étape de découpe de l'élément précurseur.

Comme montré sur la figure 5A, l'élément précurseur est réalisé en apportant des couches 32, 33 de matériaux séparateur de part et d'autre de la couche d'accrochage mécanique 10, puis en apportant les feuilles d'électrodes 31, 34 de part et d'autre des couches de matériau séparateur. D'une manière favorable, ces couches peuvent provenir de rouleaux. En particulier, la couche d'accrochage 10 peut provenir de rouleaux des moyens de support 136, 236, 336. En ce qui concerne les moyens de support élémentaires 136, ils peuvent être maintenus en rouleaux sur un support flexible annexe ultérieurement non utilisé dans la cellule électrochimique. Les autres moyens de support peuvent être mis en rouleaux par tout moyen à la portée de l'homme du métier. Les couches 10, 32, 33, 31, 34 sont amenées en coïncidence, dans un plan, par déroulement des rouleaux, et elles sont pressées ensemble par exemple entre deux ou plusieurs roues de pressage 57, 56. Ces roues de pressage 57, 56 peuvent également avoir favorablement pour fonction d'écraser les extrémités 37 des picots pour former les têtes de blocage 38.

Comme montré sur la figure 5B, l'élément précurseur a une longueur L1 et une largeur L2. Sur l'exemple de la figure 5B, les dimensions L1 et L2 sont appropriées et suffisamment grandes pour former par découpe le long des traits C1, C2, trois cellules électrochimiques rectangulaires référencées 20a, 20b, et 20c. Tout autre mode d'utilisation de la superficie de l'élément précurseur, est possible. On peut aussi bien réaliser une seule cellule électrochimique, que plusieurs cellules électrochimiques de formes et dimensions différentes.

En référence à la figure 6, en coupe, un élément accumulateur plat 100 est réalisé au moyen d'un boîtier planaire 90. Par boîtier planaire on entend un boîtier d'épaisseur très faible par exemple de l'ordre de 2mm ou inférieure à 2mm. Ce boîtier est muni de terminaux électriques 91a, 91b de polarités opposés pour l'utilisation de l'élément accumulateur en décharge et occasionnellement en charge. Ce boîtier contient au moins une cellule électrochimique élémentaire planaire selon l'invention, par exemple d'un type 21, ou 22 ou 23, dont les feuilles d'électrodes sont connectées respectivement aux terminaux électriques.

Le système d'agrafage selon l'invention permet de réaliser une cellule électrochimique planaire à électrolyte non solide. Le système permet en particulier de réaliser une cellule électrochimique plomb-acide où l'électrolyte est par exemple l'acide sulfurique. L'électrolyte acide sous forme liquide est maintenu sous pression dans le matériau séparateur perméable entre les feuilles d'électrodes pressées contre le matériau séparateur. Ainsi les feuilles d'électrodes sont tirées vers le matériau séparateur et non pas poussées par les parois d'un boîtier comme cela était connu antérieurement.

Ce système d'agrafage présente les avantages d'un conditionnement plus dense dans un boîtier plus mince ; la prévention de la séparation des feuilles d'électrodes l'une de l'autre en présence de gaz créant une surpression dans le boîtier due à des réactions chimiques ; la prévention d'une déformation des couches de matériau séparateur et feuilles d'électrodes.

Ce système d'agrafage présente en outre les avantages d'une manufacture plus simple et moins coûteuse; une prévention des pertes de capacité qui se produisaient dans le cas où une séparation ou déformation des feuilles d'électrodes se produisait ; une réduction de l'épaisseur de la cellule électrochimique qui peut descendre en dessous de 0,6mm, résultant en un boîtier plus mince dont l'épaisseur peut descendre en dessous de 2mm grâce au fait que ses parois n'ont pas besoin d'être épaisses pour maintenir la pression. A la différence, ces parois peuvent être très minces, ce qui réduit l'épaisseur du boîtier considérablement.

Dans la fabrication de la cellule électrochimique élémentaire planaire selon l'invention, les deux couches de matériau séparateur 32, 33 sont de préférence d'épaisseur égale. Le mouillage des couches de matériau séparateur par l'acide résulte dans le fait que les deux couches de matériau séparateur sont pressées l'une contre l'autre et opèrent comme une couche unique au moyen du système d'agrafage.

Les pièces du système d'agrafage sont en un matériau non conducteur et non réactif à l'électrolyte acide. La longueur des picots 35a, 35b de part et d'autre de leurs moyens de support 36 assure exactement la pression requise. Un matériau favorable pour réaliser le système d'agrafage est du type nylon. Les moyens de support 36 qui sont en position centrale vis-à-vis des deux picots 35a, 35b assurent que la pression exercée sur chacune des couches 32, 33 de matériau séparateur est égale. Une répartition régulière des couples de picots assurent une épaisseur uniforme de la cellule électrochimique. De plus, le système d'agrafage selon l'invention facilite l'utilisation de très minces feuilles d'électrodes 31, 34.

Dans un exemple de réalisation, les moyens de support des picots, en forme de ruban 236 ou en forme de surface grillagée 336, sont en matériau plastique du type nylon ayant une épaisseur de l'ordre de 50µm ou moins. Les ouvertures 41 occupent une majeure surface du ruban ou de la surface grillagée pour minimiser l'influence de la surface humide de couches de matériau séparateur occultée par les moyens de support.

Une méthode utilisée pour découper l'élément précurseur 30 en plusieurs cellules électrochimiques élémentaires peut être un découpage au moyen d'un outil mécanique, d'un faisceau laser ou toute autre méthode connue de l'homme du métier.

Dans la mise en oeuvre de l'élément précurseur, les couches de la figure 5A peuvent comprendre en outre des couches de protection externes, amenées à partir de rouleaux comme les autres couches et feuilles. Les roues 56, 57 peuvent occasionnellement être chauffantes pour combiner l'effet de la pression et de la chaleur pour sceller les extrémités des picots aux feuilles d'électrodes formant ainsi les têtes de blocage 38.

Un avantage additionnel peut être tiré du système d'agrafage selon l'invention : une cellule de forme courbe peut être réalisée.

## Revendications

1. Cellule électrochimique élémentaire planaire (20) incluant une première et une seconde feuilles d'électrodes (31, 34) entre lesquelles se trouve au moins une couche de matériau séparateur perméable pour un électrolyte sous pression, caractérisée en ce qu'elle comprend un système (11, 12, 13) d'agrafage non conducteur desdites feuilles d'électrodes et couche(s) de matériau séparateur (32, 33) pour les presser ensemble.

2. Cellule selon la revendication 1, caractérisée en ce que le matériau séparateur comprend au moins une première et une seconde couches, et en ce que le système d'agrafage comprend au moins une couche d'accrochage mécanique non conductrice (10), perméable à l'électrolyte, disposée entre lesdites couches de matériau séparateur, munie d'au moins une agrafe (35a, 35b, 38) en matériau non conducteur pour presser lesdites feuilles d'électrodes et couches de matériau séparateur contre ladite couche d'accrochage mécanique (10).

3. Cellule selon la revendication 2, caractérisée en ce que la couche d'accrochage mécanique comprend des moyens de support (36) non conducteur pour la ou les agrafes, ladite ou lesdites agrafes étant constituée(s) respectivement par un couple de picots (35a, 35b) transversaux, avec des extrémités (37) s'étendant respectivement de part et d'autre desdits moyens de support à travers ladite première couche de matériau séparateur (32) et ladite première feuille d'électrodes (31) d'une part, et à travers ladite seconde couche de matériau séparateur (33) et ladite seconde feuille d'électrode (34) d'autre part, et les extrémités (37) des picots ayant des moyens (38) pour presser ensemble lesdites couches de matériau séparateur et feuilles d'électrodes avec la couche d'accrochage.

4. Cellule selon la revendication 3, caractérisé en ce que les moyens de support (36) de la couche d'accrochage mécanique (10) ont des picots (35a, 35b) avec des extrémités (37) qui s'étendent au-delà des surfaces externes (31a, 34a) des feuilles d'électrodes (31, 34) et qui ont des têtes aplaties (38) sur lesdites surfaces externes pour bloquer en pressant ensemble lesdites couches de matériau séparateur et feuilles d'électrodes avec la couche d'accrochage.

5. Cellule selon l'une des revendications 3 ou 4, caractérisée en ce que les moyens de support (36) de la couche d'accrochage (10) comprennent au moins une surface élémentaire (136) sur laquelle ou lesquelles est ou sont positionné(s) un ou plusieurs couples de picots, pour former le système d'agrafage (11).

6. Cellule selon l'une des revendications 3 ou 4, caractérisée en ce que les moyens de support (36) de la couche d'accrochage (10) sont formés d'un ruban (236) sur lequel sont distribués un ou plusieurs couples de picots, pour former le système d'agrafage (12).

7. Cellule selon la revendication 6, caractérisée en ce que le ruban (236) de la couche d'accrochage (10) à des orifices (41) de perméabilité pour l'électrolyte, disposés entre les couples de picots.

8. Cellule selon l'une des revendications 3 ou 4, caractérisée en ce que les moyens de support (36) de la couche d'accrochage mécanique (10) sont formés d'une surface grillagée (336) munies d'orifices (41) de perméabilité pour l'électrolyte et sur laquelle sont distribués un ou plusieurs couples de picots.

9. Elément précurseur (30) pour réaliser une ou plusieurs cellules électrochimiques élémentaires planaires (20a, 20b, 20c) semblables ayant une structure selon l'une des revendications 2 à 8, caractérisé en ce qu'il comprend une couche d'accrochage mécanique (10) non conductrice en position centrale, et respectivement de part et d'autre de cette position centrale, des premières couche de matériau séparateur (32) et feuille d'électrodes (31), et des secondes couche de matériau séparateur (33) et feuille d'électrodes (34), à travers lesquelles s'étendent les picots des moyens de support de la couche d'accrochage, pour les agrafer pressées ensemble, et caractérisé en ce qu'il a une superficie suffisamment grande pour fournir une ou plusieurs cellules électrochimiques élémentaires planaires (20a, 20b, 20c) par découpe (c1, c2) de parties comprenant au moins chacune un système d'agrafage (11, 12, 13).

10. Elément accumulateur plat (100) comprenant un boîtier (90), des terminaux électriques de polarités opposées (91a, 91b), et au moins une cellule électrochimique (20) élémentaire planaire selon l'une des revendications 1 à 8, disposée dans le boîtier avec des moyens de liaison des feuilles d'électrodes et des terminaux électriques correspondants.
